# EUROPÄISCHE PATENTSCHRIFT

(11) **EP 2 609 233 B1**
(45) Veröffentlichungstag und Bekanntmachung des Hinweises auf die Patenterteilung: **21.06.2017**
(21) Anmeldenummer: 11752112.0
(22) Anmeldetag: 18.08.2011
(51) Int. Cl.: C25D 5/18, C25D 17/10, B82Y 30/00, H01M 4/88, C25D 17/12, B01J 23/42, B01J 35/00, B01J 37/34, H01M 4/92, H01M 8/10, H01M 8/1018, H01M 8/1007, C25D 5/00, B82Y 40/00, H01M 8/1004

(54) **ELEKTROCHEMISCHE ABSCHEIDUNG VON NANOSKALIGEN KATALYSATORPARTIKELN**
ELECTROCHEMICAL DEPOSITION OF CATALYST NANOPARTICLES
DÉPÔT ÉLECTROCHIMIQUE DE PARTICULES DE CATALYSEUR NANOMÉTRIQUES

(30) Priorität: 27.08.2010 DE 102010035592
(43) Veröffentlichungstag der Anmeldung: 03.07.2013
(73) Patentinhaber: Elcomax GmbH, 81737 München (DE); Universität des Saarlandes, 66123 Saarbrücken (DE)
(72) Erfinder: MITZEL, Jens, 66564 Ottweiler (DE); HEMPELMANN, Rolf, 66836 St. Ingbert (DE); ANNEL, Vivien, 61440 Oberursel (DE); NATTER, Harald, 66117 Saarbrücken (DE); STEFENER, Manfred, 80538 München (DE)
(74) Vertreter: Grättinger Möhring von Poschinger Patentanwälte Partnerschaft
(86) Internationale Anmeldenummer: PCT/EP2011/004162
(87) Internationale Veröffentlichungsnummer: WO 2012/025209

(56) Entgegenhaltungen:
- WO-A1-2008/101635
- US-A- 3 124 520
- US-A- 3 793 165
- US-A- 4 900 406
- US-A1- 2007 167 313

## Beschreibung

Die vorliegende Erfindung betrifft ein Verfahren zur elektrochemischen Abscheidung von nanoskaligen Katalysatorpartikeln, welches insbesondere im Rahmen der Herstellung von Elektroden für elektrochemische Apparate wie z.B. Brennstoffzellen, Elektrolyseuren oder weiteren elektrochemischen Sensoren und Reaktoren zur Anwendung kommen kann.

In einer Brennstoffzelle wird ein Brennstoff mit einem Oxidationsmittel oder Oxidanz elektrochemisch umgesetzt, wobei die beiden Reaktionsräume örtlich von einander getrennt werden. Als Brennstoff können sowohl Wasserstoff wie auch niedermolekulare organische Stoffe wie beispielsweise Alkohole dienen. Als Oxidationsmittel verwendet man vorzugsweise Sauerstoff bzw. Luft-Sauerstoff. Diese elektrochemische Umsetzung besitzt v.a. bei niedrigen Temperaturen einen deutlich besseren Wirkungsgrad als beispielsweise Verbrennungsmotoren.
Die Umsetzung der beiden Reaktanten in einer PEM-Brennstoffzelle erfolgt an einer Membranelektrodeneinheit (MEA, membrane electrode assembly) bestehend aus zwei Gasdiffusionselektroden (GDE's), die mit einer polymeren lonomermembran verpresst werden. Auf der Anodenseite erfolgt die Oxidation des Brennstoffes während auf der Kathodenseite das Oxidanz reduziert wird. Diese Umsetzung erfolgt üblicherweise an Platin-Katalysatoren, welche auf Rußpartikeln geträgert werden. Um die CO-Toleranz dieser Katalysatoren bzw. deren Reaktivität zu erhöhen, werden heute auch platinhaltige Legierungskatalysatoren eingesetzt.

Diese geträgerten Katalysatorpartikel werden konventionell zusammen mit einem lonomer auf einer Gasdiffusionsschicht (GDL, gas diffusion layer) aufgebracht und bilden so die Katalysatorschicht. Die Aufbringung kann hierbei durch verschiedene Verfahren wie beispielsweise Rakeln, Inkjet oder Aufsprühen erfolgen. Durch diese Verfahren werden die Katalysatorpartikel statistisch über die Katalysatorschicht verteilt, wodurch sich auch Partikel an Stellen befinden, in denen sie nicht elektrisch (über den Kohlenstoff) oder ionisch (über das lonomer) kontaktiert sind bzw. keinen Zugang zur Eduktphase besitzen. Daher spricht man hier davon, dass sich diese Partikel nicht in der 3-Phasen-Zone befinden und sich so nicht an der katalytischen Umsetzung der Edukte beteiligen können. Auf diese Weise werden bis zu 30 % des verwendeten Katalysatormetalls nicht genutzt, was die Kosten des gesamten Brennstoffzellensystems unnötig erhöht. Durch die Erhöhung der Katalysatorausnutzung kann daher entweder der Edelmetallgehalt von GDE's bei gleicher Leistung verringert und somit die Kosten verringert werden oder die Leistung wird bei gleicher Edelmetallbeladung entsprechend erhöht.

Durch die vorliegende Erfindung soll mittels einer selektiveren Abscheidung der Katalysatorpartikel in der 3-Phasen-Zone insbesondere die Wirtschaftlichkeit von PEM-Brennstoffzellen verbessert werden.

Die elektrochemische Abscheidung von nanoskaligen Elektrokatalysatoren wird bereits in WO 00/56453 beschrieben. In diesem Verfahren werden die Katalysatoren aus einem galvanischen Bad mit Edelmetallsalzen auf einem kohlenstoffhaltigen Substrat abgeschieden. Durch dieses Verfahren wird jedoch ein Großteil der Katalysatorpartikel an der Elektrodenoberfläche abgeschieden, die Katalysatorpartikel sind nicht gleichmäßig über die Katalysatorschicht verteilt. Außerdem ist mit der Nutzung der edelmetallhaltigen, galvanischen Bäder der Nachteil des Edelmetallverlustes und der hohen Aufarbeitungskosten der meist toxischen Bäder verbunden. Bei einer Abscheidung aus einem galvanischen Bad müssen die Metallionen des Weiteren aus dem Bad an die Elektrodenoberfläche diffundieren und können dort an Stellen reduziert werden, an denen sich bereits Katalysatorpartikel gebildet haben. Dies kann zu starkem Wachstum der Partikel und Ausbildung von Agglomeraten führen.

Die Nachteile dieser Bäder wurden in DE 197 20 688 C1 umgangen indem eine Edelmetallsalzschicht zwischen einer Elektrode und einem Elektrolyten aufgebracht wird und die Katalysatoren aus diesem System heraus abgeschieden werden. Jedoch wurde auch hier der Katalysator im Wesentlichen auf der Elektrodenoberfläche abgeschieden und nicht gleichmäßig über die Katalysatorschicht verteilt. Da die Abscheidung außerdem in einer Wasserdampfatmosphäre durchgeführt wurde, kommt es mit diesem Verfahren zu unerwünschten Materialverlusten.

Durch die Verwendung einer Precursorschicht, in der das Katalysatorsalz enthalten ist, konnte die Verteilung der Edelmetallsalze und daraus abgeschiedener Katalysatoren wie in EP 1 307 939 B1 verbessert werden. Auch bei diesem Verfahren erfolgt die elektrochemische Abscheidung in einer Wasserdampfatmosphäre um die ionische Leitfähigkeit der lonomermembran zu gewährleisten. Die so eingebrachte Feuchte gelangt in diesem Verfahren jedoch auch auf die Arbeitselektrodenseite und löst die in der Regel sehr gut wasserlöslichen Edelmetallsalze, was zu einer Mobilisierung dieser Salze führt. Dies kann zum Einen wiederum zum unerwünschten Verlust an Edelmetallionen führen und zum Anderen ermöglicht es die Wanderung der Ionen zu bereits abgeschiedenen Platinpartikeln und somit zum Wachstum größerer Katalysatoragglomerate. Hierdurch sinken die katalytisch nutzbare Oberfläche und dadurch die Leistung der GDE. Die so gebildeten Katalysatorpartikel und -agglomerate müssen außerdem nicht mehr zwingend in der 3-Phasen-Zone positioniert sein, da neben dem aufgebrachten lonomer auch die wässrige Lösung der Metallsalze in der Precursorschicht die ionische Leitung übernehmen kann.

Das in den Druckschriften WO 2008/101635 A1 und WO 2009/010300 A1 beschriebene Verfahren löst diese Probleme durch eine galvanostatische Abscheidung der Edelmetallionen aus einer Precursorschicht mit Hilfe eines flüssigen Elektrolyten, wie beispielsweise verdünnten Säuren. Durch die schnelle Abscheidung beim Schließen des elektrischen Stromkreises durch die Zugabe des Elektrolyten und die Verwendung ultrahydrophober Substrate kann die Diffusion der Edelmetallionen und somit das starke Wachstum von Katalysatorpartikeln und -agglomeraten größtenteils unterdrückt werden.

Durch die Verwendung dieses galvanostatisch geführten Verfahrens entstehen gerade bei hohen Stromdichten jedoch sehr große Mengen von gasförmigem Wasserstoff, der sich zum Teil auch in dem verwendeten Elektrolyten löst. Durch diesen Wasserstoff kann das Edelmetallsalz ebenfalls reduziert werden. Diese chemische Reduktion muss jedoch nicht zwingend auf einem der Rußpartikel stattfinden, der elektrischen Kontakt zum GDL hat, was dazu führen kann, dass sich Partikel außerhalb der 3-Phasen-Zone bilden. Eine potentiostatisch geführte Abscheidung mit dem gleichen Verfahren ist dabei ferner nur in einem kleinen Maßstab möglich, da es hier nicht möglich ist, das Potential über eine ausreichend große Fläche konstant zu halten, die eine Anwendung als kommerzielle Elektrode ermöglicht. Da die potentiostatische Abscheidung meist deutlich langsamer abläuft als die galvanostatische, würde die Verwendung eines flüssigen Elektrolyten außerdem zu Ionendiffusion und Wachstum von Partikeln und Agglomeraten führen.

Es ist daher die Aufgabe der vorliegenden Erfindung, ein gegenüber dem vorstehend erläuterten Stand der Technik verbessertes Verfahren zur elektrochemischen Abscheidung von Katalysatorpartikeln bereitzustellen. Ferner soll in einem weiteren Aspekt der vorliegenden Erfindung eine unerwünschte Diffusion der Metallionen in der hergestellten Precursorschicht verhindert werden, um auf dem Substrat fein verteilte Katalysatorpartikel zu erhalten und eine unerwünschte Agglomeratbildung bzw. ein zu starkes Partikelwachstum zu vermeiden.

Diese Aufgabe wird gemäß Patentanspruch 1 erfindungsgemäß dadurch gelöst, dass bei der elektrochemischen Abscheidung von nanoskaligen Katalysatorpartikeln eine als Gegenelektrode für die Arbeitselektrode fungierende Wasserstoffverzehranode verwendet wird, wobei das Arbeitselektrodenpotential gegenüber der Wasserstoffverzehranode während des Abscheidevorgangs in zeitlicher Hinsicht zumindest überwiegend ein positives Vorzeichen aufweist, sodass eine gleichzeitige Entwicklung von Wasserstoff an der Arbeitselektrode weitgehend oder vollständig vermieden wird.

Weitere vorteilhafte Ausgestaltungen der vorliegenden Erfindung sind in den abhängigen Patentansprüchen und der nachfolgenden Beschreibung genannt.

Im Rahmen der vorliegenden Erfindung ist es also möglich, wie dies weiter unten noch näher erläutert werden wird, metallische Nanopartikel (vorzugsweise Edelmetallkatalysatoren) derart elektrochemisch abzuscheiden, dass die im Stand der Technik gleichzeitig erfolgende Nebenreaktion einer chemischen Reduktion des Katalysatorprecursors durch entstehenden Wasserstoff weitgehend bzw. vollständig unterbunden werden kann, indem durch die erfindungsgemäße Verwendung einer Wasserstoffverzehranode und die Einstellung eines geeigneten elektrochemischen Potentials bzw. Potentialverlaufs zwischen Arbeitselektrode und Wasserstoffverzehranode die arbeitselektrodenseitige Entstehung von Wasserstoff im erfindungsgemäßen Sinne weitgehend oder gar vollständig vermieden wird.

Durch eine entsprechende Reaktionsführung kann die ionische Leitung bei der erfindungsgemäßen elektrochemischen Abscheidung hauptsächlich von einem festen lonomer übernommen werden. Die Abscheidung erfolgt dabei bevorzugt in situ aus einer mit Metallsalzen versehenen Precursorschicht, die auf einem Substrat aufgebracht wird. Die so entstehenden Substrate mit Nanokatalysatoren können als Elektroden in elektrochemischen Apparaturen wie Brennstoffzellen, Elektrolyseuren sowie weiteren elektrochemischen Sensoren und Reaktoren verwendet werden. Insbesondere wurde dieses Verfahren entwickelt um Gasdiffusionselektroden (GDE) für Polymer Elektrolyt Membran Brennstoffzellen (PEM-Brennstoffzellen) herzustellen.

Die abzuscheidenden Proben bestehen bevorzugt aus einem GDL, das mit einer Precursorschicht beschichtet wird. Unter einer Precursorschicht versteht man eine Schicht aus einem oder mehreren leitfähigen Trägermaterialien (z. B. Ruß), einem oder mehreren Ionomeren und Salzen des Metalls, das später als Katalysator wirken soll. Bei Legierungsabscheidungen werden entsprechend mehrere Salze eingebracht. Die Dicke der Precursorschicht liegt vorteilhaft zwischen 5 und 50 µm und kann je nach gewünschter Beladung angepasst werden. Um diese Schicht auf das GDL aufzutragen, wird das unlösliche Trägermaterial in einer Lösung der lonomere, der Metallsalze (Precursoren) sowie einem oder mehreren Lösemitteln wie beispielsweise Alkoholen dispergiert. Die eigentliche Aufbringung des Materials kann mit verschiedenen Beschichtungsverfahren wie Rakeln, Siebdruck, Airbrush, Inkjet und ähnlichen Verfahren bewerkstelligt werden. Alternativ kann die Schicht auch ohne den Precursor aufgebracht werden. Dies ermöglicht eine Herstellung und Behandlung der Schicht ohne zusätzliche Einschränkung der Bedingungen durch das verwendete Precursorsalz. Das Salz kann dann in einem folgenden Imprägnierungsschritt beispielsweise durch Aufsprühen in die bereits bestehende Träger-Ionomer-Schicht eingebracht werden. Prinzipiell können alle kommerziell erhältlichen GDL's für dieses Verfahren eingesetzt werden. Sowohl die Verwendung von gewebten oder nicht gewebten GDL's wie auch GDL's mit oder ohne MPL (microporous layer) sind einsetzbar. Je nach Charakter des GDL's und der verwendeten Beschichtungsmethode muss lediglich der Lösemittelgehalt bzw. die -zusammensetzung variiert werden. Um die Aufbringung und Haftung der Precursorschicht zu verbessern, können auch Additive wie beispielsweise Bindemittel, Dispergiermittel, Benetzungsmittel und Verdickungsmittel zugesetzt werden.

Der Precursorschicht können auch Additive zugesetzt werden, die sich auf die Abscheidung auswirken. Hierzu zählen beispielsweise Kornverfeinerer, Tenside und Komplexierungsmittel.

Vor der eigentlichen Elektrodepositon wird die Precursorschicht getrocknet, was je nach verwendetem Precursor Einschränkungen unterworfen ist, da v.a. Edelmetallsalze eine beschränkte thermische Stabilität besitzen. Um die Schichten vollständig zu trocknen, können erhöhte Temperatur, erniedrigter Druck, Schutzgas und andere Trocknungsverfahren angewendet werden. Bei separatem Auftrag der Träger-Ionomer-Schicht ohne Precursor sind die Bedingungen der Trocknung nicht durch den Precursor eingeschränkt.

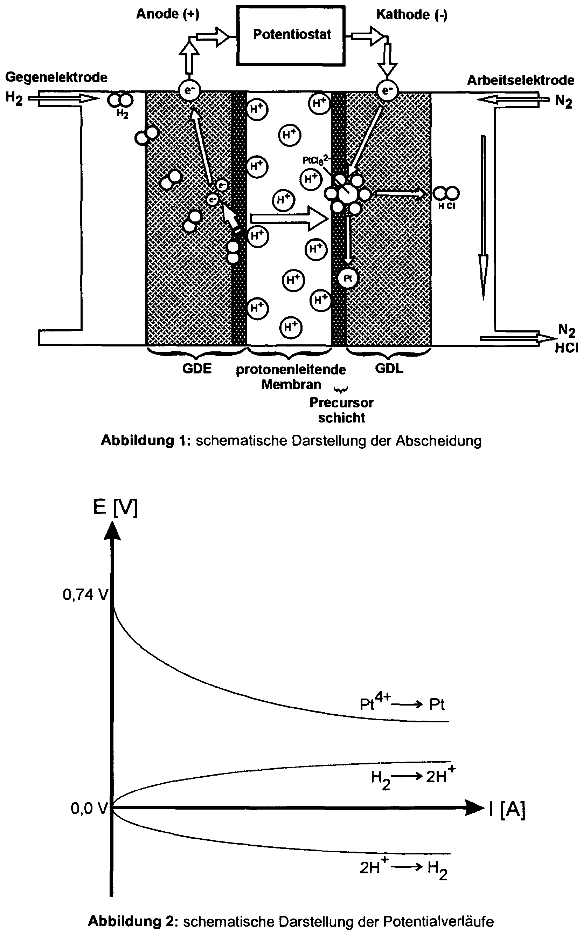

Die Bildung von Wasserstoff an der Arbeitselektrode (Kathode) während der Metallabscheidung wird vermieden, indem man als Gegenelektrode eine (zur Oxidation von Wasserstoff geeignete) Wasserstoffverzehranode verwendet, die gleichzeitig als Bezugspunkt für eine gleichmäßige Potentialkontrolle über eine große Fläche dienen kann. Der Aufbau einer zur Durchführung des erfindungsgemäßen Verfahrens geeigneten Vorrichtung ist in Abbildung 1 am Beispiel einer Platinabscheidung aus Hexachloroplatinsäure (H₂PtCl₆) dargestellt. Der äußere Aufbau besteht aus den elektrisch leitenden Endplatten und den elektrisch leitenden Flowfields. Über die Endplatten werden die Gase zu- und abgeführt, die stromführenden Leitungen kontaktiert und gegebenenfalls die ganze Zelle mit Hilfe von Heizkartuschen beheizt. Die Flowfields dienen durch ihre mäanderförmigen Kanäle zur homogenen Gasverteilung sowie zur Kontaktierung der Sense-Leitungen (Spannungsmessung).

Im Inneren dieser Vorrichtung befindet sich auf der Gegenelektrodenseite (Anode) eine GDE mit einem geträgerten Platinkatalysator, die mit einer lonomermembran heiß verpresst wurde. Die lonomermembran dient als Festelektrolyt für die Metallabscheidung und zur Trennung der beiden Elektrodenräume. Auf der Arbeitselektrodenseite (Kathode) befindet sich die Probe in Form einer mit der Precursorschicht beschichteten Gasdiffusionsschicht, welche die abzuscheidenden Metallionen enthält. Der Kontakt zwischen der Precursorschicht und der lonomermembran wird durch das Verschrauben der gesamten Vorrichtung mit einem definierten Drehmoment bewerkstelligt.

Durch die Gegenelektrodenseite strömt während der Abscheidung befeuchteter Wasserstoff. Die Befeuchtung ist nötig, da die verwendeten lonomermembranen Feuchtigkeit aufnehmen müssen um ausreichend leitfähig für eine Abscheidung zu sein. Der Wasserstoff selbst wird an der Gegenelektrode, die als Wasserstoffverzehranode arbeitet, an dem dortigen Platinkatalysator oxidiert und die entstehenden Protonen können durch die lonomermembran zur Arbeitselektrodenseite gelangen. Die bei dieser Oxidation frei werdenden Elektronen werden über den äußeren Stromkreislauf abgeleitet.

Die an der Arbeitselektrode bereit gestellten Elektronen reduzieren in diesem Beispiel die Platinionen. Aus den frei werdenden Chloridionen bildet sich zusammen mit den Protonen der Gegenelektrodenseite Chlorwasserstoff, welcher abgeführt werden muss. Aus diesem Grund wird die Arbeitselektrodenseite während der Abscheidung mit einem Inertgas wie beispielsweise Stickstoff gespült. Der Stickstoffstrom trägt des Weiteren evtl. entstehende Feuchte aus, damit die ionische Leitfähigkeit über das Ionomer und nicht über eine flüssige Phase gewährleistet wird. So kann sich das Katalysatormetall nur in direkter Umgebung des Ionomers abscheiden und sein Kontakt zur ionenleitenden Phase ist im Brennstoffzellenbetrieb gewährleistet. Durch das trockene Milieu an der Arbeitselektrode, wird außerdem die Diffusion der Metallionen unterdrückt, die sonst zu starkem Partikel- und Agglomeratwachstum führen könnte.

Wie beschrieben wird die Abscheidung der Katalysatorpartikel in einer 2-Elektroden-Schaltung durchgeführt. Bei einer potentialkontrollierten Arbeitsweise in einer solchen Schaltung bezieht man das Potential der Arbeitselektrode auf das der Gegenelektrode und hat somit bei üblicher Handhabung keinen festen Bezugspunkt. Bei der hier verwendeten Wasserstoffverzehranode handelt es sich hingegen um ein wohl bekanntes System mit einer sehr geringen Überspannung für die Wasserstoffoxidation an Platin. Es handelt sich somit um eine dynamische Wasserstoffelektrode (DHE, dynamical hydrogen electrode). Da die Überspannungen für eine Oxidation (wie die Wasserstoffzersetzung) immer ein positives Vorzeichen besitzt und die Überspannung für eine Reduktion (wie die Wasserstoffentwicklung) immer ein negatives, müsste an der Arbeitselektrode ein negatives Potential im Bezug auf die Gegenelektrode eingestellt werden um Wasserstoff zu entwickeln. Solange man hingegen das Potential an der Arbeitselektrode positiv hält, entsteht dort kein Wasserstoff und das Katalysatormetall wird nur elektrochemisch abgeschieden. Der Verlauf der Potentiale ist zur Verdeutlichung in Abbildung 2 schematisch dargestellt. Somit ist bei den gebildeten Katalysatorpartikeln der Kontakt zur elektronenleitenden Phase immer gewährleistet.

Die durchgeführte potentialkontrollierte Abscheidung kann sowohl mit einer definierten Gleichspannung wie auch mit einem variablen Spannungsprofil durchgeführt werden. Diese variablen Spannungsprofile können beispielsweise aus Spannungsrampen oder einfachen und doppelten Rechteckpulsen bestehen, wobei zur vollständigen Vermeidung einer arbeitselektrodenseitigen Wasserstoffentwicklung (und der hierdurch verursachten chemischen Reduktion des Precursorsalzes außerhalb der 3-Phasen-Zone) an der Arbeitselektrode (gegenüber der DHE) ein elektrisches Potential bzw. ein Potentialverlauf mit stets positivem Vorzeichen, welches also stets größer gleich Null ist, zu wählen ist, was ersichtlich eine besonders bevorzugte Ausführungsvariante der vorliegenden Erfindung ist. Versuche haben gezeigt, dass mit einem solchen Potential(verlauf) eine (arbeitselektrodenseitige) Entstehung von gasförmigem Wasserstoff wirksam unterbunden werden kann.

Es hat sich jedoch ferner gezeigt, dass sich im Rahmen der vorliegenden Erfindung - insbesondere bei Verwendung von potentiostatischen Doppelpulsenauch eine Verwendung kurzzeitiger negativer Spannungspulse ("Keimbildungspulse") als durchaus vorteilhaft erweisen kann, sofern zur weitgehenden Vermeidung einer arbeitselektrodenseitigen Wasserstoffentwicklung insgesamt ein in zeitlicher Hinsicht überwiegend positiver Potentialverlauf gewährleistet wird. Vorliegend wird also bereits dann von einer - im Vergleich zum Stand der Technik - weitgehenden Vermeidung der Entstehung von Wasserstoff ausgegangen, wenn, wie dies erfindungsgemäß gefordert ist, die Differenz des elektrischen Potentials zwischen Arbeitselektrode und Wasserstoffverzehranode während des Abscheidevorgangs ein (bezogen auf dessen zeitlichen Verlauf) zumindest überwiegend positives Vorzeichen aufweist.

Denn mit solchen negativen Spannungspulsen, die das ansonsten überwiegend positive elektrische Potential an der Arbeitselektrode unterbrechen, kann die Anzahl an sich bildenden Wachstumskeimen für die Katalysatorabscheidung deutlich erhöht werden, wodurch sich der Begriff "Keimbildungspulse" rechtfertigt. In besonders vorteilhafter Weise wird die Zeitdauer der Keimbildungspulse mit negativem Arbeitselektrodenpotential gegen die DHE jedoch deutlich kürzer gewählt als die Zeitdauer von dazwischen liegenden Pulsen mit positivem Vorzeichen.

In einer bevorzugten Ausführungsvariante der vorliegenden Erfindung kann somit der Potentialverlauf während des Abscheidevorgangs so gewählt bzw. eingestellt werden, dass das Arbeitselektrodenpotential gegenüber der Wasserstoffverzehranode zu mindestens 90%, insbesondere zu mindestens 95% der gesamten Abscheidezeit positiv ist, so dass ein negatives Spannungspotential (z.B. von etwaigen Keimbildungsimpulsen) während nicht mehr als 10%, bevorzugt nicht mehr als 5% der Abscheidezeit vorherrscht, wodurch eine allenfalls geringfügige Entstehung von Wasserstoff an der Arbeitselektrode erfolgt bzw. zugelassen wird.

In diesem Zusammenhang ist anzumerken, dass bei den im Stand der Technik bekannten (potentiostatischen oder galvanostatischen) elektrochemischen Abscheideprozessen üblicherweise etwa 50% - 97% der infolge des Stromflusses arbeitselektrodenseitig eingebrachten Ladungsträger die Entwicklung von (gasförmigem) Wasserstoff bewirken, während nur der Rest des Stromflusses zur elektrochemischen Abscheidung des Edelmetalls beiträgt. Im Rahmen der vorliegenden Erfindung kann demgegenüber die eingebrachte Ladung bei stets positivem Potential an der Arbeitselektrode sogar zu bis zu 100% und bei Verwendung von negativen Keimbildungspulsen im vorstehend beschriebenen Sinn zu noch immer 95% (und mehr) unmittelbar die gewünschte elektrochemische Abscheidung des Katalysators bewirken, womit deutlich wird, dass in Anwendung der vorliegenden Erfindung die arbeitselektrodenseitige Entwicklung von Wasserstoff drastisch gegenüber dem Stand der Technik reduziert bzw. sogar vollständig vermieden werden kann. Diese Zahlen konnten versuchsweise bestätigt werden, indem nach erfindungsgemäßer Herstellung einer Katalysatorschicht und Auswaschen der in der Schicht noch vorhandenen Katalysatorsalze, zunächst die zugeführte Ladung als Integral über den während der Abscheidung vorherrschenden Verlauf des elektrischen Stroms (zwischen Anodenseite und Kathodenseite) berechnet und anschließend mit der Menge an tatsächlich in der Probe abgeschiedenem Katalysator und der hierzu notwendigen Ladungsträger verglichen wird.

In dem vorgestellten Setup ist im Übrigen auch eine galvanostatische Abscheidung möglich. Da hier die an der Arbeitselektrode anliegende Spannung jedoch nicht kontrolliert wird, kann während der Abscheidung Wasserstoff entstehen, was zu chemischer Reduktion führen kann. Beschränkt man hingegen das Potential bei der galvanostatischen Abscheidung auf positive Potentiale gegenüber der Gegenelektrode, wird dieses Problem umgangen.

Das erfindungsgemäße Verfahren stellt somit eine Möglichkeit dar geträgerte nanoskalige Katalysatorpartikel in einer Precursorschicht auf großen Flächen potentialkontrolliert abzuscheiden. Auf diese Weise kann die gleichzeitige Wasserstoffbildung an der Arbeitselektrode weitgehend oder vollständig vermieden werden, wodurch die Katalysatorpartikel (beinahe) ausschließlich elektrochemisch abgeschieden werden. Durch die trockenen Bedingungen der Arbeitselektrode während der Abscheidung wird des Weiteren die Diffusion der Ionen und somit das Wachstum von Partikeln und Agglomeraten unterdrückt. Unter nanoskaligen Katalysatorpartikeln sind vorliegend Partikel mit einem Durchmesser zwischen 1 und 100 nm zu verstehen. Die für PEM-Brennstoffzellen hergestellten Katalysatorpartikel besitzen üblicherweise eine Größe zwischen 1 und 5 nm.

Die Erfindung wird in den folgenden Anwendungsbeispielen zum besseren Verständnis genauer dargestellt. Diese dienen lediglich zur Erläuterung und schränken die Erfindung und deren Schutzbereich in keiner Weise ein.

### Anwendungsbeispiele

### Beispiel 1

### Potentiostatische Gleichspannungsabscheidung von Platin-Katalysatorpartikeln

Zur Herstellung der Precursorschicht wird ein handelsübliches GDL mit MPL mit einem Platinprecursor imprägniert oder eine hergestellte Precursorschicht gemäß den Druckschriften WO 2008/101635 A1 und WO 2009/010300 A1 verwendet.

Die entstehende Probe wird in die elektrochemische Abscheidezelle mit der Wasserstoffverzehranode eingebaut und die Probe unter folgenden Parametern abgeschieden.
Modus: Gleichspannungsabscheidung
Arbeitselektrodenpotential: 150 mV vs. DHE
Abscheidedauer: 15 Minuten
Befeuchteter Wasserstoffstrom (95% relative Feuchte bei 25 °C): 40 ml/min
Stickstoff-Strom: 300 ml/min

Bei der Abscheidung bilden sich nanokristalline Platin-Teilchen von 10-15 nm Durchmesser mit Agglomeratbildung bis zu 100 nm.

### Beispiel2

### Potentiostatische Pulsabscheidung von Platin-Katalysatorpartikeln

Analog zu Beispiel 1 wird zur Herstellung der Precursorschicht ein handelsübliches GDL mit MPL mit einem Platinprecursor imprägniert oder eine hergestellte Precursorschicht gemäß den Druckschriften WO 2008/101635 A1 und WO 2009/010300 A1 verwendet.

Die im Vakuum getrocknete Schicht wird in die Abscheideapparatur überführt und unter folgenden Parametern abgeschieden:
Modus: potentiostatischer Doppelpuls
Nukleationspotential: 50 mV vs. DHE
Nukleationszeit: 1 ms
Wachstumspotential: 150 mV vs. DHE
Wachstumszeit: 100 ms
Pausenzeit (offener Stromkreis): 50 ms
Abscheidedauer: 15 Minuten
Befeuchteter Wasserstoffstrom (95% relative Feuchte bei 25 °C): 40 ml/min
Stickstoff-Strom: 100 ml/min

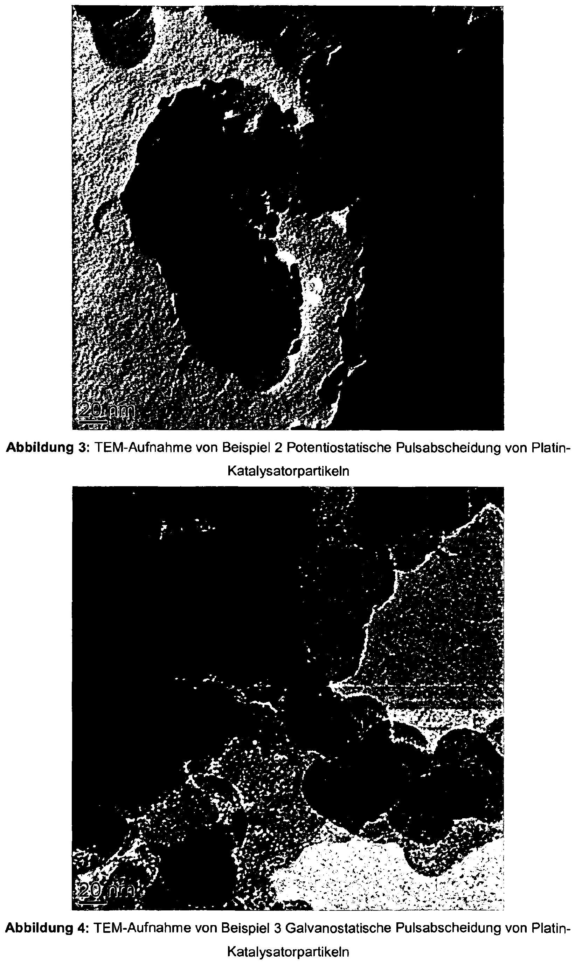

Bei der Abscheidung (Abbildung 3) bilden sich bei einer Platin-Beladung von 1 mg-Pt/cm² nanokristalline Platin-Teilchen von 5-10 nm Durchmesser mit Agglomeratbildung bis zu 20 nm.

### Beispiel 3

### Galvanostatische Pulsabscheidung von Platin-Katalysatorpartikeln

Analog zu den Beispielen 1 und 2 wird zur Herstellung der Precursorschicht ein handelsübliches GDL mit MPL mit einem Platinprecursor imprägniert oder eine hergestellte Precursorschicht gemäß WO 2008/101635 A1 und WO 2009/010300 A1 verwendet.

Die im Vakuum getrocknete Schicht wird in die Abscheideapparatur überführt und unter folgenden Parametern abgeschieden:
Modus: galvanostatischer Einfachpuls
Pulsstromdichte: 300 mA/cm²
Pulsdauer: 0,5 ms
Pausenzeit (offener Stromkreis): 2,5 ms
Abscheidedauer: 15 Minuten
Befeuchteter Wasserstoffstrom (95% relative Feuchte bei 25 °C): 150 ml/min
Stickstoff-Strom: 300 ml/min

Bei der Abscheidung (Abbildung 4) bilden sich bei einer Platin-Beladung von 1 mg-Pt/cm² nanokristalline Platin-Teilchen von 2-5 nm Durchmesser; Agglomeratbildung wird nicht beobachtet.

## Patentansprüche

1. Verfahren zur elektrochemischen Abscheidung von nanoskaligen Katalysatorpartikeln mit einem Durchmesser zwischen 1 und 100 nm unter Verwendung einer als Gegenelektrode für die Arbeitselektrode fungierenden Wasserstoffverzehranode, wobei das Arbeitselektrodenpotential gegenüber der Wasserstoffverzehranode während des Abscheidevorgangs in zeitlicher Hinsicht zumindest überwiegend ein positives Vorzeichen aufweist, sodass eine gleichzeitige Entwicklung von Wasserstoff an der Arbeitselektrode weitgehend oder vollständig vermieden wird.

2. Verfahren nach Anspruch 1, **dadurch gekennzeichnet, dass** das Arbeitselektrodenpotential gegenüber der Wasserstoffverzehranode zu mindestens 90%, insbesondere zu mindestens 95% der gesamten Abscheidezeit positiv ist.

3. Verfahren nach Anspruch 2, **dadurch gekennzeichnet, dass** das Arbeitselektrodenpotential gegenüber der Wasserstoffverzehranode zur vollständigen Vermeidung einer gleichzeitigen Wasserstoffentwicklung an der Arbeitselektrode stets positiv ist.

4. Verfahren nach einem der Ansprüche 1 bis 3, **dadurch gekennzeichnet, dass** durch Spülung der Arbeitselektrodenseite während der Abscheidung mit einem Inertgas die arbeitselektrodenseitige Feuchte reduziert wird.

5. Verfahren nach einem oder mehreren der Ansprüche 1 bis 4, wobei die Katalysatorpartikel aus einer zuvor auf einer Gasdiffusionsschicht aufgebrachten Precursorschicht heraus abgeschieden werden.

6. Verfahren nach Anspruch 5, bei dem die Precursorschicht mit gleichzeitigem oder nachträglichem Eintrag eines oder mehrerer Precursoren durch gängige Beschichtungsverfahren aufgebracht und getrocknet wird.

7. Verfahren nach Anspruch 6, wobei die Precursorschicht ein oder mehrere Trägermaterialien, ein oder mehrere lonomere sowie den Precursoren umfasst.

8. Verfahren nach einem oder mehreren der Ansprüche 5 bis 7, **dadurch gekennzeichnet, dass** einer Dispersion zur Herstellung der Precursorschicht Additive, wie z.B. Bindemittel, Dispergiermittel, Benetzungsmittel, Lösemittelgemische, Verdickungsmittel und/oder Antioxidantien zugesetzt werden um die Aufbringung und Haftung der Schicht zu verbessern.

9. Verfahren nach einem oder mehreren der Ansprüche 5 bis 8, **dadurch gekennzeichnet, dass** der Precursorschicht Additive, wie z.B. Kornverfeinerer, Tenside und/oder Komplexierungsmittel, zugesetzt werden, die die Abscheidung beeinflussen.

10. Verfahren nach einem oder mehreren der Ansprüche 1 bis 9, bei dem Nanometall- oder Nanolegierungskatalysatoren elektrochemisch hergestellt werden, die eines oder mehrere der Elemente Pt, Ru, Au, Co, Ni, Cr, Fe, Cu, Ni, Zn, Rh, Pd, Sn, Re, Os, Ir, Cd und Ag enthalten.

11. Verfahren nach einem oder mehreren der Ansprüche 1 bis 10, bei dem die elektrochemische Abscheidung durch eine konstante oder variable Spannung, insbesondere mit einem Spannungsverlauf in Form von Spannungsrampen oder anderen Einfach- oder Doppelpulsen verschiedener Form, an der Arbeitselektrode hervorgerufen wird.

12. Verfahren nach einem oder mehreren der Ansprüche 1 bis 10, bei dem die elektrochemische Abscheidung durch einen konstanten oder variablen Strom, insbesondere mit einem Stromverlauf in Form von Stromrampen oder anderen Einfach- oder Doppelpulsen verschiedener Form, an der Arbeitselektrode hervorgerufen wird.

13. Verfahren nach einem oder mehreren der Ansprüche 1 bis 12, wobei das Verfahren in einer batchweisen oder kontinuierlichen Fertigung durchgeführt wird.

14. Verfahren nach einem oder mehreren der Ansprüche 1 bis 13, bei dem die Precursorschicht auf eine Gasdiffusionsschicht (GDL) bestehend aus Kohlefaserpapieren, Kohlefaservliesen, Kohlefasergeweben, Kohlefasernetzen, Metallnetzen, leitfähig ausgerüsteten Kunststoffgeweben oder leitfähig ausgerüsteten Kunststoffsubstraten mit oder ohne MPL (microporous layer) aufgebracht wird.

15. Verfahren nach einem oder mehreren der Ansprüche 1 bis 14, bei dem die elektrochemische Reduktion der Metallsalze bei Temperaturen zwischen 0 und 200 °C stattfindet.

## Claims

1. Method for the electrochemical deposition of nanoscale catalyst particles having a diameter between 1 and 100 nm using a hydrogen consuming anode functioning as a counter electrode for the working electrode, wherein the working electrode potential with respect to the hydrogen consuming anode has at least a predominantly positive sign at the time during the deposition process so that a simultaneous development of hydrogen at the working electrode is largely or completely avoided.

2. Method according to claim 1, **characterized in that** the working electrode potential with respect to the hydrogen consumption anode is positive at least 90%, in particular at least 95%, of the total deposition time.

3. Method according to claim 2, **characterized in that** the working electrode potential is always positive with respect to the hydrogen consumption anode for completely avoiding simultaneous hydrogen development at the working electrode.

4. Method according to one of claims 1 to 3, **characterized in that** the working electrode-side moisture is reduced by flushing the working electrode side with an inert gas during the deposition.

5. Method according to one or more of claims 1 to 4, wherein the catalyst particles are deposited from a precursor layer previously applied to a gas diffusion layer.

6. Method according to claim 5, in which the precursor layer is applied and dried by simultaneous or subsequent addition of one or more precursors through continuous coating processes.

7. Method according to claim 6, wherein the precursor layer comprises one or more carrier materials, one or more ionomers, and the precursors.

8. Method according to one or more of claims 5 to 7, **characterized in that** a dispersion for the preparation of the precursor layer additive, such as, for example, binders, dispersants, wetting agents, solvent mixtures, thickeners and/or antioxidants are added to improve the application and adhesion of the layer.

9. Method according to one or more of claims 5 to 8, **characterized in that** the precursor layer additives which influence the deposition, such as, for example, grain refiners, surfactants and/or complexing agents, are added.

10. Method according to one or more of claims 1 to 9, in which nanometal or nano alloy catalysts are produced electrochemically, which contain one or more of the elements Pt, Ru, Au, Co, Ni, Cr, Fe, Cu, Ni, Zn, Rh, Pd , Sn, Re, Os, Ir, Cd and Ag.

11. Method according to one or more of claims 1 to 10, in which the electrochemical deposition on the working electrode is caused by a constant or variable voltage, in particular with a voltage profile in the form of voltage ramps or other single or double pulses of different shapes.

12. Method according to one or more of claims 1 to 10, in which the electrochemical deposition on the working electrode is caused by a constant or variable current, in particular with a current profile in the form of current ramps or other single or double pulses of different shapes.

13. Method according to one or more of claims 1 to 12, wherein the method is carried out in batch or continuous production.

14. Method according to one or more of claims 1 to 13, in which the precursor layer is applied to a gas diffusion layer (GDL) consisting of carbon fiber papers, carbon fiber webs, carbon fiber fabrics, carbon fiber nets, metal nets, conductively-equipped plastic fabrics or conductively-equipped plastic substrates with or without MPL (microporous layer).

15. Method according to one or more of claims 1 to 14, in which the electrochemical reduction of the metal salts takes place at temperatures between 0 and 200 °C.

## Revendications

1. Procédé pour la séparation électrochimique de particules de catalyseur nanométriques avec un diamètre entre 1 et 100 nm en utilisant une anode consommable d'hydrogène fonctionnant comme contre-électrode pour l'électrode de travail, le potentiel de l'électrode de travail par rapport à l'anode consommable d'hydrogène comportant pendant l'opération de séparation du point de vue temps au moins essentiellement un signe positif de telle sorte qu'un développement simultané d'hydrogène sur l'électrode de travail est largement ou complètement évité.

2. Procédé selon la revendication 1, **caractérisé en ce que** le potentiel de l'électrode de travail par rapport à l'anode consommable d'hydrogène est positif à au moins 90%, notamment à au moins 95% de tout le temps de séparation.

3. Procédé selon la revendication 2, **caractérisé en ce que** le potentiel de l'électrode de travail par rapport à l'anode consommable d'hydrogène est toujours positif pour éviter complètement un développement d'hydrogène simultané sur l'électrode de travail.

4. Procédé selon l'une quelconque des revendications 1 à 3, **caractérisé en ce que** l'humidité du côté de l'électrode de travail est réduite par rinçage du côté de l'électrode de travail pendant la séparation avec un gaz inerte.

5. Procédé selon l'une quelconque ou plusieurs des revendications 1 à 4, les particules de catalyseur étant séparées d'une couche de précurseurs préalablement déposée sur une couche de diffusion de gaz.

6. Procédé selon la revendication 5, pour lequel la couche de précurseurs est déposée et séchée avec chargement simultané ou ultérieur d'un ou de plusieurs précurseurs par procédé de revêtement courant.

7. Procédé selon la revendication 6, la couche de précurseurs comprenant un ou plusieurs matériaux de support, un ou plusieurs ionomères ainsi que les précurseurs.

8. Procédé selon l'une quelconque ou plusieurs des revendications 5 à 7, **caractérisé en ce que** des additifs comme par ex. : des liants, des émulsionnants, des agents mouillants, des mélanges de solvants, des épaississants et/ou des antioxydants sont ajoutés à une dispersion pour fabriquer la couche de précurseurs afin d'améliorer l'application et l'adhérence de la couche.

9. Procédé selon l'une quelconque ou plusieurs des revendications 5 à 8, **caractérisé en ce que** des additifs comme par ex. : des affineurs granulométriques, des agents tensioactifs et/ou des agents de complexation sont ajoutés à la couche de précurseurs, qui ont un effet sur la séparation.

10. Procédé selon l'une quelconque ou plusieurs des revendications 1 à 9, pour lequel des catalyseurs nanométalliques ou de nano-alliages sont fabriqués électrochimiquement, qui contiennent un ou plusieurs des éléments Pt, Ru, Au, Co, Ni, Cr, Fe, Cu, Ni, Zn, Rh, Pd, Sn, Re, Os, Ir, Cd et Ag.

11. Procédé selon l'une quelconque ou plusieurs des revendications 1 à 10, pour lequel on provoque la séparation électrochimique sur l'électrode de travail par une tension constante ou variable, notamment avec une allure de tension en forme de rampes de tension ou d'autres impulsions simples ou doubles de différente forme.

12. Procédé selon l'une quelconque ou plusieurs des revendications 1 à 10, pour lequel on provoque la séparation électrochimique sur l'électrode de travail par un courant constant ou variable, notamment avec une allure de courant en forme de rampes de courant ou d'autres impulsions simples ou doubles de forme différente.

13. Procédé selon l'une quelconque ou plusieurs des revendications 1 à 12, le procédé étant exécuté dans une production par lots ou continue.

14. Procédé selon l'une quelconque ou plusieurs des revendications 1 à 13, pour lequel la couche de précurseurs est appliquée sur une couche de diffusion de gaz (GDL) composée de papiers en fibres de carbone, de non-tissé en fibres de carbone, de tissus en fibres de carbone, de réseaux en fibres de carbone, de réseaux métalliques, de tissus synthétiques équipés de manière conductrice ou de substrats synthétiques équipés de manière conductrice avec ou sans couche microporeuse (CMP).

15. Procédé selon l'une quelconque ou plusieurs des revendications 1 à 14, pour lequel la réduction électrochimique des sels métalliques a lieu à des températures entre 0 et 200°C.
